# EUROPEAN PATENT SPECIFICATION

(11) **EP 2 272 315 B1**
(45) Date of publication and mention of the grant of the patent: **28.03.2018**
(21) Application number: 09164626.5
(22) Date of filing: 06.07.2009
(51) Int. Cl.: A01C 23/00, A01C 23/04

(54) **A system and apparatus for reducing emission from slurry**
System und Vorrichtung zur Reduzierung des Schlammausstoßes
Système et appareil pour réduire l'émission de boue

(43) Date of publication of application: 12.01.2011
(73) Proprietor: Toft, Morten, 6600 Vejen (DK)
(72) Inventor: Toft, Morten, 6600 Vejen (DK)
(74) Representative: Tellefsen, Jens J.

(56) References cited:
- EP-A1- 1 972 189
- FR-A- 1 119 507
- GB-A- 1 042 938
- NL-C2- 1 012 650

## Description

### Field of the Invention

The present invention relates to reducing the emission of particular ammonia from slurry when adding the slurry to the field, in particular a distribution system as well as a method.

### Background of the Invention

It is known that there are significant amounts of emissions from slurry, particular ammonia but also bad odour when the slurry is being stirred up during the distribution to the soil of e.g. an agricultural field.
Furthermore, it is known that the fertilizing effect of the slurry is reduced when the slurry is delivered on top of the soil due to volatilisation of primarily ammonia. In addition, the fact that nutrients are water soluble makes them vulnerable for running off the application site especially when applied to dry soils, wet soils or undulated soils. Traditionally, the above problems have been solved by delivering the slurry into the soil by making a furrow, placing the slurry into the furrow and covering the slurry with soil. However, it is power-demanding to draw a large number of harrow teeth and slurry covering mechanisms through the soil, hereby reducing the working width of the slurry tanker, whereby the working time is increased. Furthermore, the overall demands to the construction of the slurry tanker are increased.
The reduced operational width of the slurry tanker increases the working time to distribute the slurry. Thus, it necessitates that the slurry tanker drives between the tracks ordinarily used for field work e.g. when distributing artificial fertilizer, when spraying with pesticides or other. Driving between the standard tracks can reduce the yield from the field with up to 5 %.
Treatment of slurry prior to application is a trend in intensive animal husbandry. The treatment is often separation of slurry, resulting in a liquid part and a solid organic part.

Also processing the slurry through a biogas system is increasing. Both treatments results in that the slurry has a viscosity much like water. This physical condition of the slurry is most unfortunate when the slurry is being applied to undulated ground. +/-65% of agricultural fields are considered undulated and will have an effect on the application of slurry. The combination of undulation and large amounts of slurry - normally between 20 to 40 ton pr. Ha (2 - 4 liter pr. m²) - results in a large run-off where significant amounts of nutrients are being carried with the water to a place where it was not intended. This results in an uneven growth and has a negative impact on the economy and a negative environmental impact from the nutrients. Thus, slurry applied to the field to be situated in liquid form above the ground are prone to slide to the lower part of the field where plants cannot absorb the extra amount of nutrients and thus, loss of nutrients through emission and leaching of nutrients into the waterways are a result, causing poor economy and a severe negative environmental impact.

From US patent 3,966,450 it is known to add mineral acid to the slurry to lower the pH value of the slurry in order to reduce the emission of ammonia from the slurry. This will reduce the odour and emission. However, handling large amounts of mineral acid as well as adding mineral acid to slurry is dangerous when no specific system is provided.

From patent application EP 1 972 189, it is known to add acid to a part of the slurry and to form a layer or foam hereof. The layer or foam is arranged on top of the rest of the slurry added to the application site to prevent emission from the slurry. In order to do so a dual system is needed which can be complicated to operate, maintain and repair. In addition, the handling of large amounts of acid as well as adding acid to slurry is dangerous when no specific system is provided.

Also, the positioning of liquid slurry beneath the layer or foam, increase the risqué of the layer or foam to run off, especially at application sites that are more or less inclined. Thus, this method has little influence on the run-off effect of nutrients.

### Object of the Invention

It is the object of the present invention to create a simple system and method for reducing the emission of volatile substances in a safe and simple manner in order to overcome the above mentioned problems.

### Description of the Invention

These problems are addressed by the following invention. This invention describes a distributing system for distributing a slurry, such as a liquid manure, on an application site for example an agricultural field, where said system comprises a slurry tank in liquid communication with means for reducing emission from said slurry, where said means comprises foam generating means which are configured to turning all the slurry into foam to prevent run-off effects, preferably using a compressed air foam system or an air aspirated foam system, where said means for reducing emission is in communication with distributing means for allowing said foamed slurry to be placed on the application site.

Preferably, the foam generating means are arranged on the slurry tank.

In an advantageous embodiment, the distribution system further comprises an acid tank and means for adding/injecting the acid into said slurry and where the acid tank is connected to the generating means for generating said foam. It should be emphasised that throughout the application the term "slurry" is to be interpreted as any kind of liquid manure, organic fertilizer, sludge or similar liquids or semi-liquids in the form of a watery mixture of primarily insoluble matter.
Furthermore, it should be emphasised that throughout the application the term "application site" is to be interpreted as any kind of field, ground or the like, wherein the fertilizing and/or nutritive qualities of the slurry is utilized.

Throughout the application the term emission reduced substance is to be interpreted as the product resulting from the process of treating slurry with the means for reducing emission.

Changing all of the physical and/or chemical properties of the slurry to be spread at the application site enables a simple and safe distribution system to be designed. Hereby, large advantages can be achieved not only economically, but also by use of the system, which will be easy to operate, maintain and repair.

In order to obtain a system that changes the properties of the slurry, what is needed is means for reducing emission e.g. adding acid to the slurry or generating foam together with ability to store the slurry before modifying it and means for distributing it to the application site. Furthermore, communications e.g. in the form of tubes are needed for the system to function properly. The components of means for reducing emission and means for distributing can be retrofitted onto existing machinery like a slurry tank. Thus, the farmer only needs to buy additional equipment and not whole new machinery for the distribution system to function. It is advantageous to generate foam as the emission reduced substance. The foam is formed from all of the slurry to be distributed. The foam slowly releases the slurry to a liquid form, enabling the soil to absorb all of the nutrients from the slurry in the place where it was intended and creating good economy through plant growth where it was intended and reduce the potential environmental impact caused by surplus nutrients. Thus, foam advantageously prevents the run-off effect often observed when adding liquid slurry or liquid slurry in combination with foam onto undulated and inclined grounds. Furthermore, foam reduces the volatilization of unwanted volatile substances like NH₃ because the bobble structure of the foam causes the diffusion rate of the volatile substance to be lowered, hereby diminishing the diffusion.

In an aspect of the invention, the foam drain time is maximised with intend of creating a foam coating of the field. This will have an effect much like a greenhouse and serve as a growth enhancement for the plants, as the soil temperature rises under the protective foam. Instead of applying the slurry in one pass with 20 - 40 ton pr. Ha, several passes with smaller amounts of slurry are made over a number of days, potentially eliminating the use of plastics in open air agricultural or horticultural operations.
Also the layer of foam will potentially reduce the turbulence of the atmosphere resulting from wind and thus significantly reduce evaporation of water from the field. The amount of moisture available to plants is a critical factor, especially in the early growth stages where the slurry is often applied and can result in significant higher yield.
It is to be understood that emission reduced substance is any kind of cover, slime, or membrane-like material which is capable of reducing the emission from slurry. By emission from the slurry is to be interpreted as emission primarily of ammonia but also of other fertilizing, nutritive or smelling substances of the slurry.
The emission reduced substance can also be created by the distribution system by injecting acid into the slurry before it is distributed to the application site. This can be performed either alone or in combination with foam generation whereby the emission of volatile substances is further reduced. The slurry is normally being applied from the storage tank to a field 2 - 8 times during the season. The storage tanks normally have between 1000 to 5000 m³ capacity. It is very difficult to add the acid to such a huge amount and to mix it evenly.
Further, when adding the acid to the slurry, it results in a significant lowering of the pH in the slurry. However, when allowed to remain in the storage tank for more than 24 hours after the application of acid, the pH buffer in the slurry organic substance will be activated and eventually result in a higher pH value than before the acid treatment. It is therefore necessary to treat the slurry in the process of application from the storage tank to the field.
Adding acid to slurry can be very dangerous as an instant development of CO₂ and heat takes place. If the acid would be added during filling of the container of the slurry tank, the CO₂ would create a lot of foam and limit the amount of slurry that can fit into the tank, alternatively, it could create such a pressure that the tank could break.

In order to prevent any potential damage to the slurry tank and create potential explosive situations, the acid can be added to the slurry during application to the field. Injecting the acid directly into- or near the pump is therefore advantageous in that it gets to be evenly mixed into the slurry and transported directly to the application site without any danger. However, the acid pump/acid injection can be arranged at several positions along the pathway of the slurry from the slurry pump and to the means for distribution as long as the acid is not injected into the slurry tank.

Advantageously, the acid tank can be arranged on a tractor connected to and in front of the slurry tank. However, the acid tank can as well be arranged on the slurry tank.

When using acid to reduce the pH value of the slurry, there are substantial personnel risqué involved as acid is extremely corrosive and is classified as dangerous goods. Furthermore, the amount of acid is substantial involving from 10 to +100 litres pr. Ha. In this process, it is very important that the logistic chain does not expose the personnel to unnecessary risqué. The system therefore comprises a front tank container that is designed to be transported to a place of filling - manufacture of acid, harbour or other filling place, where maximum security can be observed during the filling of the tank. The potential hazardous task of filling the front tank with acid is therefore no longer the responsibility of the tractor driver. He will simply lift the tank into position in the front of the tractor. It is also very important that this task can be performed by one person only, as the driver of the tractor very often will be without assistance from others. The front tank is then connected to the generating means and acid can safe and securely be transported from the front tank to the place of acid injection, where the acid is mixed with the slurry.

Advantageously, the distributing system is an original equipment manufacturer (OEM) or a retrofit system, which can be mounted onto various known vehicles like slurry tanks. Thus, the system is highly compatible with the equipment already available in e.g. farms and is, thus, economical feasible for the farmer.

In a further advantageous embodiment, said distributing system further comprises one or more pH sensors.

The pH sensors can be fitted to the distributing system in one or more places. Preferably, two pH sensors can be fitted to the distributing system when adding acid to obtain the emission reduced substance. By placing pH sensors before and after the injection/addition of acid result in a measurement of the effect of added acid, and the amount of acid can be adjusted by knowledge of the pH before and after the treatment with the means for reducing emission in combination with knowledge regarding the volume of slurry to be treated. This is highly beneficial since the correct amount of acid can be supplied. Too low an amount would lead to insufficient lowering of pH and an insufficient amount of NH₃ would be changed to NH₄⁺. Thus, the volatile NH₃ would still be emitted. Adding too much acid is economically insufficient as well as the handling of large amount of acid is troublesome. Hence, it is important to find the correct balance between too much and too little acid added.
In a further advantageous embodiment, said distributing system further comprises one or more sensors able to measure the amount of Nitrogen, Phosphor and/or Potassium in the slurry.
As an option, the system comprises one or more sensors for measuring the NPK contend of the slurry or at least one of the components Nitrogen, Phosphor, and Potassium. This is beneficial since the amount of each component is important for the proper growth of the plants on the field. In addition, the amount needed varies with the soil type and nutrient contents as well as the crops. Knowledge of the composition of the particular soil to be treated is an advantage which can be obtained with GPS and GSM systems integrated in the system.
Furthermore, in order to optimise the economical beneficial amount of acid to be used, it is necessary to know the amount of nitrogen in the slurry. The level of nitrogen can vary between different slurries, but also within a single slurry storage tank according to how well the slurry has been mixed prior to distribution. Hence, measurement of each batch of slurry is preferred.

The level of nitrogen can be measured through an external NIR sensor system or it can be integrated in the control system of the slurry tanker. Measuring the amount of nitrogen in the slurry on the fly enables the system to distribute the emission reduced substance according to kg N pr. Ha rather than m³ slurry pr. Ha. As each tank load has a varied amount of kg N pr. Ha, this is a great advantage in order to distribute the ideal amount of nutrients which is part of the emission reduced substance. Algorithms in the system will then determine whether the needed amount of acid will only comply with current legislation or more acid should be added in order to optimise the economical benefit. This will optimise the yield - and thus economy - and reduce the potential leaching of nutrients to the waterways that causes environmental damage.

In a further advantageous embodiment, said distributing system further comprises a GPS unit with a log function or a GPS unit with a log function and a GSM connection.

Advantageously, a GPS unit with a log function or a GPS unit with a log function and a GSM connection to store the data on a remote server is combined with the distributing system. A number of countries, like Denmark and Holland, have introduced legislation to limit the emission from application of slurry. In order to manage the legislation, a demand for documentation of the reduction of emission is required and can be provided by the GSP unit with a log function as well as a GSM connection.

In a further advantageous embodiment, said distributing system is mounted on a mobile unit.

The design of the distributing system enables it to be integrated with known slurry tanks by connecting the means for reducing emission and the distributing means for distributing the emission reduced substance to the application site to the slurry tank. It is emphasized that slurry tank is to be understood as any tank capable of comprising slurry and to communicate with means for reducing emission and distributing means for final application of the emission reduced substance (modified slurry) to the application site.

The distributing system is advantageously mounted to a mobile unit whereby it can be transported not only to the application site but also around in the application site. As an example the mobile unit can be a tractor, a truck or any other vehicle capable of moving the distributing system.

In an advantageous embodiment, the overall system comprises besides a tractor and a slurry tank: a safe front tank system for a tractor to transport the acid to the application site, means for acid logistics injection of acid near or in the pump of the tank for distributing slurry or in the pipe leading the acid to the distributor, a system to measure the pH value of the slurry (units for measuring of volume, an online pH measuring unit) in order to identify the amount of acid needed to comply with current legislation on limits of emission, system to document (terminal or documentation unit) the effect on the acid and hereby the emission from the from the slurry, an on-off safety unit, and anti-theft protection.

This invention further describes a slurry emission reducing system comprising a distributing system for distributing a slurry where said slurry emission reducing system further comprises a buffer tank, where said buffer tank is arranged separately from said slurry tank, and where said generating means are arranged at said slurry tank.

In a further advantageous system, said buffer tank comprises a mixer function for a slurry storage tank; a mechanism for self loading, preferably a pump or a propeller; said mechanism for self loading transports slurry from the slurry storage tank to the buffer tank; optionally an acid addition system with one or more pH sensors; said acid addition system preferably comprises an acid injector, an acid tank, and means for connecting the acid injector to the acid tank; an external or internal power unit, and/or an adjustable re-loading ability, whereby slurry can be pumped from the buffer tank to the slurry tank.

A buffer tank is normally positioned in the field and used when the distance from the storage tank to the field is too long, thus using a lorry transport from tank to field and the slurry tank for application to the field.

In this new function, the buffer tank will be used at all times, placed adjacent to the storage tank or in the field if needed. This will change the functionality of the buffer tank from being a low cost intermediate storage facility to incorporate a number of new functions. It is an advantage to treat the slurry before loading it to the slurry tanker as the weight of the tanker is reduced and there is less potential hazard when the acid is not transported on a moving vehicle.
The buffer tank can be in three different versions:
- Buffer tank as a container. This can only be transported by lorry or a container trailer with wire- or container hook system.
- Buffer tank with a container with a raise / lowering system for wheels / axles for transport behind an agricultural vehicle.
- Buffer tank as a self propelled unit.
With the new function for the buffer tank, one or more new features are advantageously added: a mixer function for the slurry storage tank, self loading ability, acid injection system with pH measurement, external or integrated power unit, adjustable top re-loading ability.
The Mixer function comprises of using either a pump system or a mechanical propeller for bringing the slurry on a liquid form for pumping and application. When placed next to the slurry storage tank, it is logic to incorporate this function into the buffer tank. Hereby, the mixing of the slurry in the slurry storage tank is performed under the control of the buffer tank and just before the slurry is to be transported from the slurry storage tank to the buffer tank by use of the self loading ability. Thus, the condition of the slurry is optimal for the loading process.
A mechanism for self loading uses either a pump or a propeller. Both systems can be used to load slurry from the slurry storage tank into the buffer tank.

In the process of loading the buffer tank or when in the tank, the acid can be injected. In this configuration, the slurry is not contained in a tank and thus the injection does not pose any hazard or risqué of foam creation. Additionally, acid can be introduced in both the distributing system and the buffer tank in order to obtain the optimal pH-value, which can be measured by sensors arranged at different positions at the slurry distributor.
pH measurement by pH-sensors will determine the amount of acid. This measurement can either be manually performed or more advantageously in an automatic manner. In an automatic manner, the pH can be continuously measured and the amount of acid added to the buffer tank controlled by the outcome of the pH-measurement analysed by a computer unit.

The new functionalities can additionally comprise a power source. This can be either through an external Power Take Off (PTO) system or the like, or it can be through an integrated power unit, either as a trailed unit or as an integrated self propelled unit. Re-loading from the buffer tank directly into the slurry tanker is an advantage as the slurry tanker does not need to carry a crane arm as well as time is saved.
The invention further describes a method for reducing emission of volatile substances such as ammonia from slurry by a distributing system according to any of the claims for distributing a slurry and/or a slurry emission reducing system where said method comprises the following steps changing all said slurry into an emission reduced substance, where said emission reduced substance is a foam, and adding said foamed emission reduced substance to a soil surface at an application site.
Additionally, a method for reducing emission from slurry is described; where said emission reduced substance is a combination of different foam types.
The means for generating said emission reduced substance comprises tubes and flow systems for transporting the slurry to the generating means, where the slurry is modified into an emission reduced substance for example changing the slurry into foam by beating gas into the slurry by a compressed air foam system (CAFS) or by adding acid e.g. by injection to the slurry. Alternatively, acid can be injected at first and then changed into foam..

The so formed emission reduced substance is then transported by the distribution means of the slurry tank to the application site. As an example, the emission reduced substance can be transported in tubes to a distributor, which can be specifically designed or be a distributor as already present on ordinary tanks for containing slurry. Thus, the distributor can be of a form, which distributes the slurry/emission reduced substance by broad spreading through one nozzle, broad spreading through a boom with two to 100 nozzles or by placing the slurry/emission reduced substance at the application site through tubes hanging vertically from a bar.

In addition, multiple CAFS equipments are today capable of generating two or more separate streams where the physical characteristics of the foam differs e.g. a fine and a coarser bobble structure. After generating the different types of foams these can be gathered into one stream within the CAFS equipment and as such be transported to the means for distributing. Due to the nature of the foam the foams comprising different physical characteristics do not mix. Thus, at the application site the more coarse foam ends up closest to the ground while the finer foam ends up on top of the coarse foam.

Furthermore, a method is described wherein said foam is made by a mechanical process such as injection of a gas, where said process is selected from one of the following: injecting air or another gas into said slurry; or by beating air or another gas into said slurry; or by depressurising said slurry e.g. by using a compressed air foam system or an air aspirated foam system.

The process of creating the emission reduced substance can advantageously be produced substantially during the delivery to said application site. Thus, the slurry inside the distribution tank is not modified and no additional equipment is to be introduced into the distribution tank itself. Equipment for treating the slurry is to be arranged at the outlet of the distribution tank or at an additional position outside the distribution tank. Hence, the equipment can be situated on ordinary slurry tanks.

In an advantageous method the emission reduced substance is created from a liquid portion of said slurry, where some or all solid matter of said slurry has been removed.

This can be performed by a filtering system or a system centrifuging the slurry. This particular treatment is especially beneficial when the emission reduced substance is foam because solid matter in the slurry can obstruct with the process of creating foam. Foaming equipments such as CAFS (compressed air foam system) have the ability to create different types of foam with different bubble sizes and drain time and is excellent for the creation of foam as an emission reduced substance.
Furthermore, a method is described where an acid is added to said slurry before said slurry is changed into foam.
In addition, a method is described where said amount of acid added to the slurry is calculated by a computer unit on the basis of, and preferably continuously adjusted, by one or more measurements of pH obtained by one or more pH sensors.

Lowering the pH value to obtain less emission from slurry is well known. However, slurry from different animals as well as different batches of slurry from the same slurry tank will vary in their pH value to start with, as well as their response to the added acid. Thus, the amount of acid necessary in each case will differ for example with type of animal, season, storage time of slurry, mixing and feeding. Adding too much acid is costly as well as it increases the potential risk of transporting and handling it. Advantageously, the pH of the slurry and/or the emission reduced substance can be measure one or more times in order to adjust the amount of acid added to the composition. The process can advantageously be automatic by measuring both the before and after pH values. Most probably this will require two or more pH value sensors. This enables algorithms to adjust the amount of acid automatically according to a preset pH value. The targeted value can either be a government determined level of emission, or reduction of emission or it can be as a result of an economical beneficial level, where the saved amount of ammonium is optimised for plant growth.
When adding acid to slurry, there is a potential explosive hazard, as a significant amount of heat and CO₂ is generated in the process. It is therefore important that the injection of acid takes place in the process of application of slurry to the field. The position of the injection pump and control of the volume of acid as well as start and stop of injection is therefore very important in order to avoid any dangerous situations.

In addition, a method is described wherein an additive is added to said slurry or said emission reduced substance after changing all said slurry into said emission reduced substance.

Furthermore, a method is described wherein said additive is a foam stabilizing agent, preferably said foam stabilizing agent is a surfactant and/or a surfactant look-alike, more preferred said foam stabilizing agent is slurry protein or extracted slurry protein.

In an aspect of the invention, said foam is created from the slurry and stabilized through adding a foam stabilizing agent. This is beneficial in cases where the slurry has been through a separation or biogas process. In these cases, a lot of the protein has been removed from the slurry and the primary basis for foam formation has been reduced or in extreme cases removed.

As examples of foaming agents, are proteins from slurry extracted before it has been processed in the biogas unit. The proteins can be re-applied to the slurry after the biogas process. Other foaming agents can be different types of surfactants like sodium lauryl ether sulphate, sodium dodecyl sulphate, and ammonium lauryl sulphate as well as surfactant look-alikes e.g. different types of proteins.

Slurry proteins are proteins, which are extracted from slurry before the slurry is further processed in a biogas unit. Proteins are an organic surfactant and can cause the slurry to foam at different points in the distribution process from stable to field. Using concentrated slurry proteins as an additive, increases the drain time of the foam without introducing any additional chemistry into the food-chain. Hence, there will be no need to obtain any permission to use it as well as it has a very low price.

Furthermore, a method is described wherein said additive is ozone, hydrogen peroxide, a ferrous sulphate solution, or bacteria.

In an aspect of the invention, one or more additives can be added to said slurry or said emission reduced substance. The additive can be one or more components from the groups of odour reducing agents, odour masking agents, oxidising and/or deodorizing agents. Examples are ozone, hydrogen peroxide, ferrous sulphate solution, extracted slurry protein, different strains of bacteria or mineral acids like sulphuric acid, phosphoric acid, hydrochloric acid, nitric acid, boric acid, hydrofluoric acid, hydrobromic acid, hydrochloric acid, or various organic acids like formic acid, acetic acid, oxalic acid, citric acid, or lactic acid.

Ozone and hydrogen peroxide are commonly known additives for reducing odours of slurry and can beneficially be combined with the emission reduced substance either before or after the change of the slurry into the emission reduced substance. Hereby, not only the emission of volatile substance from the slurry is inhibited but also the odour. This is highly advantageous for the environment.

Different types of mineral acids can be added to the slurry or emission reduced substance. Preferably, sulphuric acid is chosen due to the low costs and that the acid value of the acid. Sulphuric acid comprises two positively charged hydrogen ions, causing a high ability to lower the pH value, and change ammonia to ammonium (NH₃ to NH₄⁺). Ammonium cannot evaporate through diffusion like ammonia and will be held by the soil through its positive charge and as such is one of the best fertilizers available.

Bacteria are known to be able to metabolise several types of products e.g. they are known to be able to reduce the smell of slurry by metabolising components hereof. Advantageously, the lactic bacteria can be added but other strains of bacteria can be suitable as well.

Furthermore, a method is described where said emission reduced substance is created from two or more streams, said streams each have different physical properties, and where said streams are arranged on top of one another and/or said streams are arranged beside one another.

Two or more streams of emission reduced substances can be created with different physical properties in order to promote a low emission of volatile substance and allow the nutrients to be absorbed by the soil.

In an aspect of the invention, the foam application could be divided into two foam streams, where the first foam stream has a course bubble structure that does not last long and in which there is no additive in the slurry and the second foam stream is a much finer bubble structure and treated with acid and/or additives. Alternatively, both streams can be treated with acid and/or additives.

The finer foam is placed on top of the course foam. This will enable a reduced amount of additive as not all of the foam is treated and as the finer foam structure has a longer drain time. It will improve the emission reduction as it will have a longer drain time and thus a longer effect on emission reduction. At the same time, it will prevent the run-off effect of slurry on undulated ground.

In a further advantageous method, finer foam can be arranged at the sides of the course foam as well as on top of the foam. This can perform an efficient encapsulation of the course foam and further prevent volatilisation of compound when the course foam is drained.

In an aspect of the invention, the course and the fine foam is mixed and distributed through the same system. After application to the soil, the fine foam will continuously have a longer drain time and will be left after the course foam is soaked into the soil, eventually leaving a film of low pH liquid on the surface, enabling a much longer effect of the emission reduction.

As an alternative, one or more of the streams can be created by addition of different types of emulsifier(s) added to the emission reduced substance. Hereby, the emission reduced substance is kept at the place of application for sufficient time for the nutrients of the emission reduced substance to be absorbed by the ground. As an example the emulsifier can be a surfactant.

Furthermore, a method for reducing emission of volatile substances by a distributing system and/or a slurry emission reducing system is described where said method further comprises the following steps transferring a slurry from a slurry storage tank to a buffer tank by a mechanism for self loading, preferably a pump or a propeller; treating said slurry with a means for reducing emission, such as acid, by adding or injecting said means for reducing emission to said slurry; and pumping said slurry to a slurry tank by an adjustable re-loading ability, whereby said slurry can be distributed to an application site.

Using a buffer tank in combination with a slurry tank and a slurry storage tank is advantageous. When placing the buffer tank next to the slurry storage tank slurry can be automatically transported from the buffer tank to the slurry storage tank by means of a mechanism for self loading e.g. a pump. The transportation can either be performed by the farmer by activating the mechanism for self loading when the buffer tank needs to be filled or a sensor in the buffer tank can be installed to measure when the buffer tank is empty or nearly empty and then start transporting slurry from the slurry storage tank to the buffer tank.

The slurry in the buffer tank is then treated with means for reducing emission e.g. by adding acid in an amount given by the volume of the slurry in the buffer tank as well as the initial pH and/or the amount of ammonia in the slurry. Hereby, an emission reduced substance is created. This emission reduced substance can then be pumped onto a slurry tank for distribution to the application site. On the slurry tank the emission reduced substance may be further affected by means for treating slurry e.g. by creating foam before distribution to the application site.

### Description of the Drawing

- fig. 1: illustrates a slurry distributor system with tubes as seen from the side,
- fig. 2: illustrates a slurry distributor system with nozzles as seen from the back,
- fig. 3: illustrates a compressed air foam system (CAFS),
- fig. 4: illustrates an aspirated air foam system,
- fig. 5: illustrates a buffer tank as seen from the side,
- fig. 6: illustrates a agricultural field with plants and foam layer.

### Detailed Description of the Invention

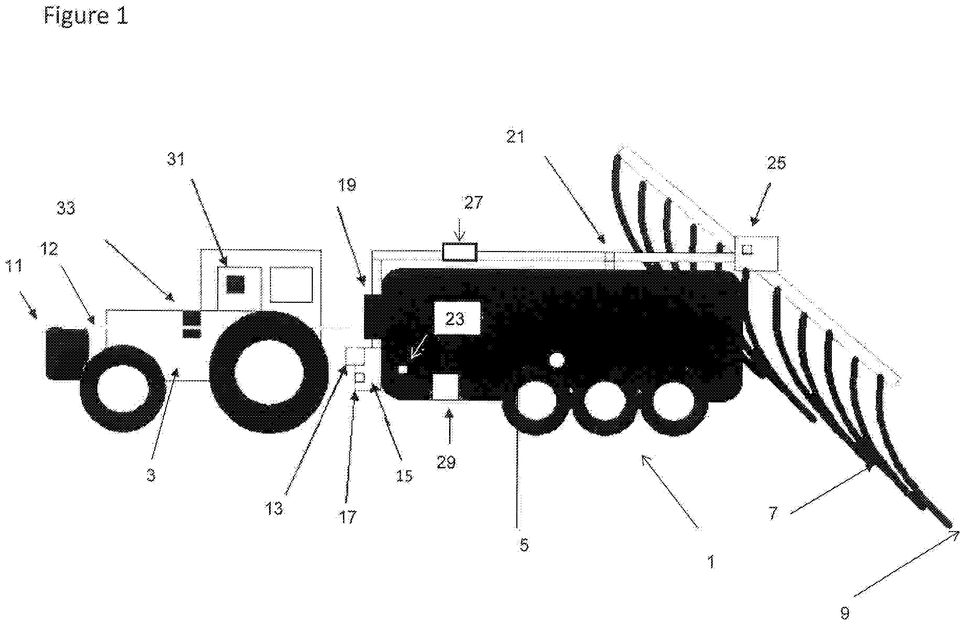

A slurry distributor system 1 is illustrated in fig. 1. This slurry distributor system 1 comprises a tractor 3 connected with a slurry tank 5. The slurry tank 5 is of the type where the distribution of the slurry is performed through a multiple of tubes 7 for addition of the slurry onto the field (application site) 9.

The tractor 3 and the slurry tank 5 is equipped with one embodiment of the distributing system. At the front of the tractor 3 an acid tank 11 is arranged, which is connected via a pipe system 12 to an acid pump 13 in combination with a slurry pump 15. As the acid must not be accidentally injected into the tank containing slurry 5, the acid pump 13 works together with a RPM sensor 17 to be coordinated with the activity of the slurry pump 15, a flow of a flow sensor 19 is flowing, and/or a recirculation sensor 21 is set to application to field.

The mixture of acid with slurry is then transported past the flow sensor 19 and the recirculation sensor 21 before the emission reduced substance is distributed to the field 9 through the multiple tubes 7.

The distributing system further comprises pH sensors (23, 25) in order to regulate the amount of acid injected. In this particular illustration two pH sensors are present, one 23 for measuring the pH of the untreated slurry, and one 25 for measuring the pH of the slurry after addition of slurry.
The amount of acid to be pumped into the slurry can as well be determined through the flow sensor 19 alone or in combination with one or both pH sensors 23, 25. Further adjustment of the amount of acid pumped into the slurry can be performed by a NIR system 27, which measures the amount of nitrogen, which in connection with the pH value calculates the percentage of NH₃ versus NH₄⁺. Depending on these measurements more or less acid can be added to the slurry.

All data communication on the system is managed through the ECU - Electronic communication Unit 29 and controlled by an operator interface system, which is controlled from the terminal unit 31. The terminal unit 31 can be either integrated into the tractors existing interface system or retrofitted.

A fleet management unit 33 can further be installed to the system in order to improve documentation. The fleet management unit 33 can contain a positioning system, telecommunication ability and log function, monitors the operation and stores the information on a card and sends the data on-line to a server that provides the needed documentation to the authorities.

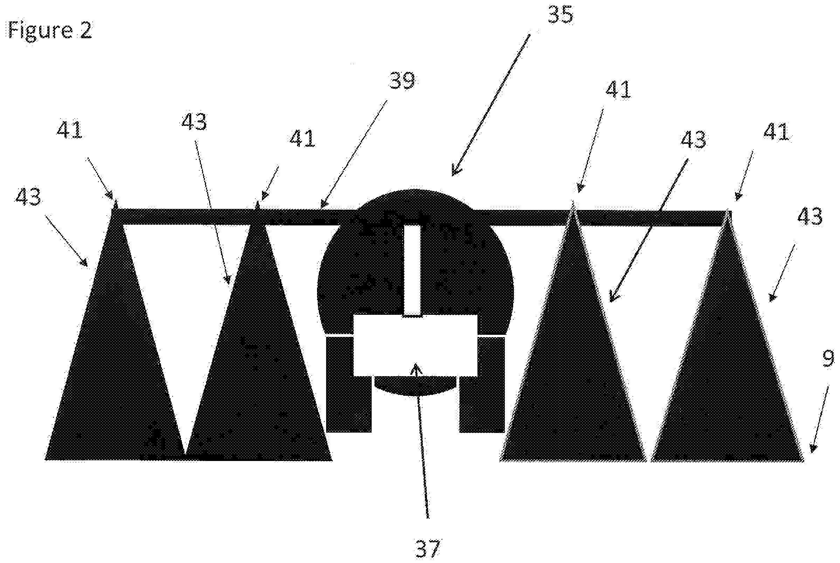

Figure 2 illustrates another embodiment of a tank for distributing slurry 35. The tank for distributing slurry 35 contains at the back CAFS equipment 37 for injecting air into the slurry. It is to be emphasized the CAFS equipment 37 can as well be arranged at alternative places on the tank for distributing slurry 37 as well as it can be alternative types of foam generating means. The tank for distributing slurry 37 is further equipped with a bar 39 with four nozzles 41. However, the bar may comprise more or less nozzles. From the nozzles 41, foam 43 is distributed to the application site 9.

Though not illustrated the slurry tank 37 in figure 2 can as well comprise all or some of the equipment as described for the embodiment illustrated in Figure 1.

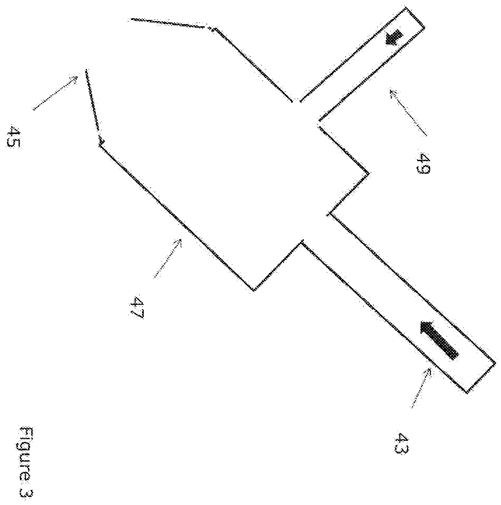

Figure 3 illustrates the principles behind the CAFS equipment. Slurry is pumped under pressure through a pipe 43 into a turbulence chamber 47. Connected to the turbulence chamber 47 is further a compressed air inlet 49. Air is pressed into the turbulence chamber 47 and mixes herewith whereby foam is created. The foam exits the turbulence chamber 47 through the nozzle 45.

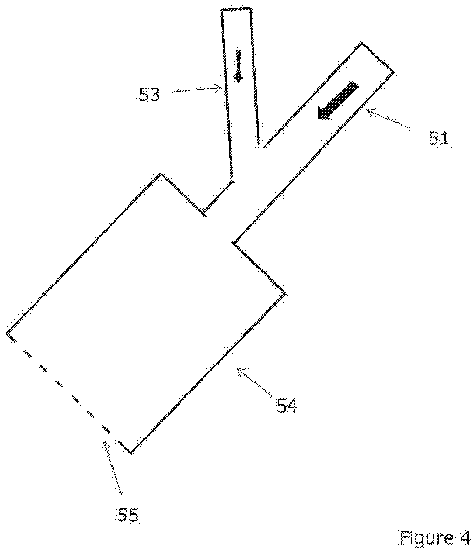

Figure 4 illustrates another common system of generating foam - the air aspirated foam system. This system comprises a pipe with slurry pumped under pressure 51 into a turbulence chamber 54. A natural aspirated air intake 53 is connected to the pipe 51. Due to the pressure at which the slurry is introduced air is drawn into the pipe 51 from the natural aspirated air intake 53 and air and slurry are mixed into foam in the turbulence chamber 54. The foam exits the turbulence chamber 54 through a perforated screen 55. Compared with the compressed air foam system the physical properties of the foam are more difficult to control with the air aspirated foam system.

In both embodiments as illustrated in Figure 3 and Figure 4 the gas is ordinary air, but in another embodiment the air can be replaced by gas as ozone or another gas which besides enabling that the foam to be generated further reduces the odour of the slurry.

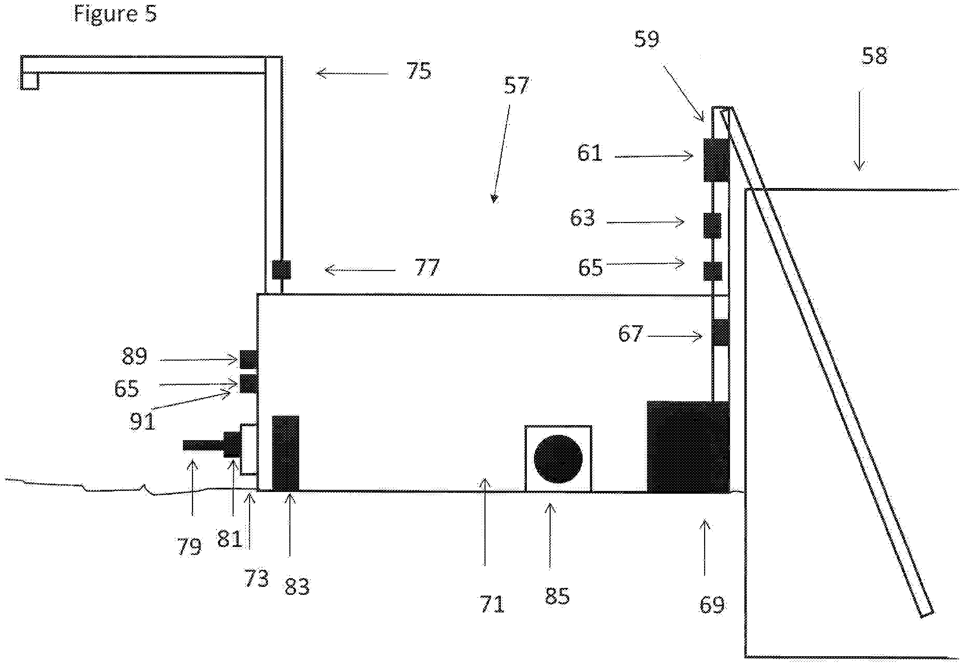

Figure 5 illustrates a buffer tank 57, which can be arranged separately from the slurry tank (illustrated in figure 1+2). In this illustration the buffer tank 57 is situated beside a slurry storage tank 58. However, the buffer tank 57 can as well be situated close to the field.
The buffer tank 57 has an integrated mixer / loading system 59 that enables it to mix the slurry and independently load slurry from the slurry storage tank 58 to the buffer tank 57. The integrated mixer/loading system 59 can beneficially be equipped with a flow sensor 61, a NIR sensor 63, and a pH sensor for measuring the pH of the slurry 65. All of the sensors 61, 63, 65 can cooperate in order to obtain the most beneficial amount of acid to be added to the particular batch of slurry.

Acid is added to the slurry through an acid pump 67, which pumps acid from an acid tank 69 into the slurry. The acid can be pumped into the slurry either in the integrated mixer/loading system 59 or after the slurry has entered the basin 71. After correct mixing of the acid with the slurry, a slurry pump 73 pumps the adjusted slurry into a slurry unloading system 75. In the slurry unloading system 75, a pH sensor 77 is present for measuring the pH of the unloaded slurry. Hereby, fine adjustment of the amount of acid pumped into the slurry can be obtained.

The buffer tank 57 is furthermore equipped with a RPM shaft 79, a RPM sensor 81, and a power unit 83. To facilitate easy transportation the buffer tank 57 is provided with retractable wheels 85.

For means of documentation the measurement of the sensors 61, 63, 65, 77 is in communication with ECU - Electronic communication Unit 87 and a terminal unit 89. Furthermore, a fleet management unit 91 can be installed to the system in order to improve documentation.

The acid mixed slurry is unloaded through the slurry unloading system 75 into a slurry tank. In order for the system to function properly, it only needs to comprise means for generating the emission reduced substance as well as means for distribution of the emission reduced substance as well as communication between the different means in order to transport the slurry. The means for distributing the emission reduced substance can be the ones already present at the slurry tank like multiple tubes. Thus, the buffer tank holds a lot of advantageous as for example moving the acid tank from the tractor to the buffer tank 57. Thus, the danger of driving with a tank containing corrosive acid is prevented.

In order for the system to function properly it is beneficial to mix the acid to the slurry just before the unloading into the slurry tank.

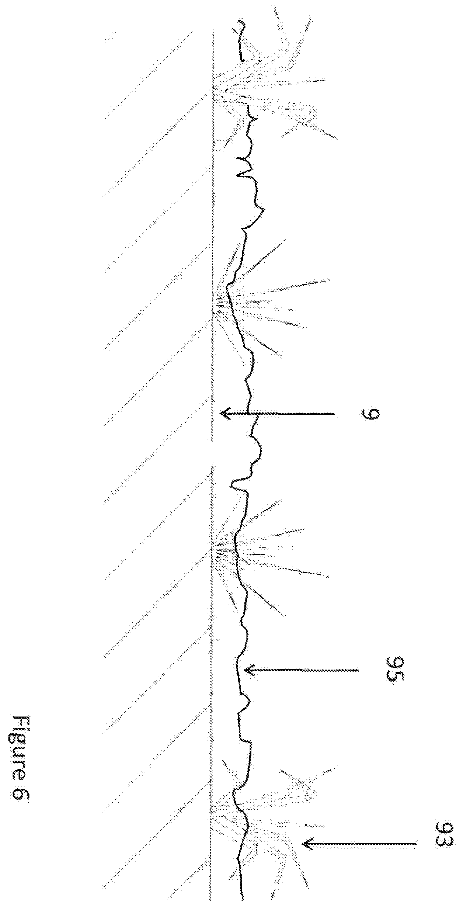

Figure 6 illustrates an application site 9 comprising crops 93. The emission reduced substance 95 is added to the application site 9 by means of tubes (as illustrated in figure 1) and lies as a protective layer between the rows of crops 93 and on the crops 93. The emission reduced substance 95 is beneficial generated foam, which drain time is given by the structure of the foam. During the de-generating of the foam (draining) the liquid is released slowly and thus, is easily absorbed by the application site 9. In this manner, it is prevented that nutrients in the slurry run-off and are not available at the place where it is distributed. In addition the drain time of the foam can be influenced during the creation of the foam. Foam with coarse bobble structure shows shorter drain time than foam with finer bobble structure and use of surfactants as additive, can further increase the drain time. Thus, the physical structure of the foam can be adjusted to match the time period it takes the liquid to penetrate the ground.

### Examples

### EXAMPLE I - USE OF SLURRY FOAM AS A GROWTH ENHANCEMENT

It is known that glass or transparent plastic can increase the temperature under its cover because the sun's rays can pass through but the heat developed does not have the same abilities. Glass is used in growth houses and plastic is used in the fields to increase the heat and thus get more and quicker growth from plants.

The same effect as the use of glass and plastic can be obtained by the use of foam. Foam is only more volatile, so in order to obtain the same effect, it must be applied more often, depending on the drain time of the foam. In connection with using slurry as a growth enhancement, it is therefore an advantage to use additives that can increase the drain time of the slurry such as protein or other surfactants.
It is therefore an advantage to increase the application of slurry from one pass with from 20 to 40 m³ pr. pass to many passes with a smaller amount of slurry turned into foam. The effect will be an increased soil temperature and increased plant growth.

### EXAMPLE II - USE OF SLURRY FOAM AS A MOISTURE RETAINER

It is known that dry air alone, or in combination with turbulence (wind) in the atmosphere will dry out soils and potentially create less plant growth due to drought or even kill the plants.

Although the moisture in foam eventually also will dry out, foam has the ability to delay this process through its much increased surface that exposes less of the moisture to evaporation than otherwise would have been the case with the moisture in liquid form.

This ability can be used to reduce the evaporation of moisture from fields. With the surface covered with foam, this layer must disappear before any moisture will evaporate from the soil. Thus, delaying the process and prolong the time in which the plants have access to soil moisture

### EXAMPLE III - USE OF SLURRY FOAM AS AN HERBICIDE

It is known that weeds in fields will reduce the yield from cultured plants or even completely dominate the cultured plants so there will be no yield at all. It is known to use chemical or organic herbicides or mechanical tools to remove weeds from competition with cultured plants.

Although the slurry foam itself will not kill the weeds, it may alter the competition between the cultured plants and the weeds for the sunlight. Many crops such as potatoes, beets, maize, or soybeans are planted in rows. With a precision placement of foam in between row crops, the slurry foam may restrict the sunlight that reaches the soil severely as it gets absorbed in the foam and is turned to heat. This will result in a huge advantage for the cultured plant that are not covered with foam and change the competition for nutrients, sun and moisture, eventually leaving the weed plants to die.
Slurry from organic managed farms can, thus, be used as an organic herbicide.

Along with the organic principles, it is possible to add organic acid as an additive to the foam, lowering the pH value to 2 or less. This will increase the slurry foams aggressiveness towards the weed plants and make it more effective as an herbicide as many seedlings are very sensitive towards a sour environment and will quickly die when covered with low pH value slurry foam.

## Claims

1. Distributing system (1) for distributing a slurry, such as a liquid manure, on an application site (9) for example an agricultural field, where said system comprises
- a slurry tank (5) in liquid communication with
- means for reducing emission from said slurry comprising
foam generating means (37, 47, 54) which are configured to turning all the slurry into foam to prevent run-off effects, preferably using a compressed air foam system (37, 43,45,47,49) or an air aspirated foam system (51, 53, 54, 55) and where said means for reducing the emission is in communication with
- distributing means(7) for allowing said foamed slurry to be placed on the application site (9).

2. Distributing system for distributing a slurry according to claim 1 **characterised in that** the foam generating means (37, 47, 54) are arranged on the slurry tank (5).

3. Distributing system for distributing a slurry according to claim 1 **characterised in that** the distributing system further comprises an acid tank (11) and means (13) for adding/injecting an acid into said slurry, where the acid tank is connected to said generating means for generating said foam.

4. Distributing system for distributing a slurry according to any of the claims 2-3 **characterised in that** said distributing system further comprises one or more pH sensors (23, 25).

5. Distributing system for distributing a slurry according to any of the preceding claims **characterised in that** said distributing system further comprises one or more sensors (27) able to measure the amount of Nitrogen, Phosphor and/or Potassium in the slurry.

6. Distributing system for distributing a slurry according to any of the preceding claims **characterised in that** said distributing system further comprises a GPS unit with a log function or a GPS unit with a log function and a GSM connection.

7. Distributing system for distributing a slurry according to any of the preceding claims **characterised in that** said distributing system is mounted on a mobile unit.

8. A slurry emission reducing system comprising a distributing system for distributing a slurry according to any of the claims 1-7 **characterised in that** said slurry emission reducing system further comprises a buffer tank (57), where said buffer tank is arranged separately from said slurry tank (5), where said generating means are arranged at said slurry tank, and where said buffer tank comprises
- a mixer function (59) for a slurry storage tank (58);
- a mechanism for self loading, preferably a pump or a propeller; said mechanism for self loading transports slurry from the slurry storage tank (57) to the buffer tank (57);
- optionally, an acid addition system (69) with one or more pH sensors (65); said acid addition system preferably comprises an acid injector, an acid tank (69), and means for connecting the acid injector to the acid tank;
- an external or internal power unit,
- and/or an adjustable re-loading ability (75), whereby slurry can be pumped from the buffer tank (57) to the slurry tank (5).

9. A method for reducing emission of volatile substances such as ammonia from slurry by a distributing system for distributing a slurry and/or a slurry emission reducing system according to any of the claims 1-8 **characterised in that** said method comprises the following steps
- changing all said slurry into an emission reduced substance, where said emission reduced substance is a foam;
- adding said foamed emission reduced substance to a soil surface at an application site (9).

10. The method for reducing emission of volatile substances according to claim 9 **characterised in that** said emission reduced substance is a combination of different foam types.

11. The method for reducing emission of volatile substances according to any of the claims 9 or 10
**characterised in that** said foam is made by a mechanical process such as injection of a gas, where said process is selected from one of the following: injecting air or another gas into said slurry; or by beating air or another gas into said slurry; or by depressurising said slurry e.g. by using a compressed air foam system (37, 43,45,57,49) or an air aspirated foam system (37, 51,53,54,55).

12. The method for reducing emission of volatile substances according to any of the claims 9-11 **characterised in that** an acid is added to said slurry before said slurry is changed into foam.

13. The method for reducing emission of volatile substances according to claim 12 **characterised in that** said amount of acid added to the slurry is calculated by a computer unit on the basis of, and preferably continuously adjusted, by one or more measurements of pH obtained by one or more pH sensors (23, 25).

14. The method for reducing emission of volatile substances according to any of the claims 9-13 **characterised in that** an additive is added to said slurry or said emission reduced substance after changing all said slurry into said emission reduced substance, where said additive is selected from one or more of the following ozone, hydrogen peroxide, a ferrous sulphate solution, bacteria or a foam stabilizing agent, preferably said foam stabilizing agent is a surfactant and/or a surfactant look-alike, more preferred said foam stabilizing agent is slurry protein or extracted slurry protein.

15. The method for reducing emission of volatile substances according to any of the claims 10-14 **characterised in that** said emission reduced substance is created from two or more streams, said streams each have different physical properties, and where said streams are arranged on top of one another and/or said streams are arranged beside one another.

16. A method for reducing emission of volatile substances according to any of the claims 9-14, by using a distributing system and/or a slurry emission reducing system according to any of the claims 1-8 **characterised in that** said method further comprises the following steps
- transferring a slurry from a slurry storage tank (58) to a buffer tank (57) by a mechanism for self loading, preferably a pump (73) or a propeller;
- treating said slurry with means for reducing emmission, such as an acid, by adding or injecting said means for reducing emission to said slurry;
- pumping said slurry to a slurry tank (5) by an adjustable re-loading ability (75), whereby said slurry can be distributed to an application site (9).

## Patentansprüche

1. Verteilungssystem (1) zum Verteilen eines Schlamms, wie zum Beispiel einer Gülle, auf einer Applikationsstelle (9), beispielsweise einem landwirtschaftlichen Feld, wobei das System folgendes umfasst:
- ein Schlammtank (5) in Flüssigkeitsverbindung mit
- Mitteln zum Reduzieren der Emission aus dem genannten Schlamm, die folgendes umfassen:
Schaumerzeugungsmittel (37, 47, 54), die so konfiguriert sind, dass der gesamte Schlamm aufgeschäumt wird um Ablaufeffekte zu verhindern, vorzugsweise unter Verwendung eines Druckluftschaumsystems (37, 43, 45, 47, 49) oder eines Luftaspirationsschaumsystems (51, 53, 54, 55) und wo diese Mittel zur Reduzierung der Emission in Verbindung stehen mit
- Verteilungsmitteln (7), damit der aufgeschäumte Schlamm auf der Applikationsstelle (9) platziert werden kann.

2. Verteilungssystem (1) zum Verteilen eines Schlamms, nach Anspruch 1, **dadurch gekennzeichnet, dass** die Schaumerzeugungsmittel (37, 47, 54) auf dem Schlammtank (5) angeordnet sind.

3. Verteilungssystem (1) zum Verteilen eines Schlamms, nach Anspruch 1, **dadurch gekennzeichnet, dass** das Verteilungssystem ferner einen Säuretank (11) und Mittel (13) zum Hinzufügen / Einspritzen einer Säure in den Schlamm umfasst, wobei der Säuretank mit den Schaumerzeugungsmitteln verbunden ist.

4. Verteilungssystem (1) zum Verteilen eines Schlamms nach einem der Ansprüche 2-3, **dadurch gekennzeichnet, dass** das Verteilungssystem ferner einen oder mehrere pH-Sensoren (23, 25) umfasst.

5. Verteilungssystem (1) zum Verteilen eines Schlamms nach einem der vorhergehenden Ansprüche, **dadurch gekennzeichnet, dass** das Verteilungssystem weiterhin einen oder mehrere Sensoren (27) umfasst, die in der Lage sind, die Menge an Stickstoff, Phosphor und/oder Kalium im Schlamm zu messen.

6. Verteilungssystem (1) zum Verteilen eines Schlamms nach einem der vorhergehenden Ansprüche, **dadurch gekennzeichnet, dass** das Verteilungssystem ferner eine GPS-Einheit mit einer Logfunktion oder eine GPS-Einheit mit einer Logfunktion und einer GSM-Verbindung umfasst.

7. Verteilungssystem (1) zum Verteilen eines Schlamms nach einem der vorhergehenden Ansprüche, **dadurch gekennzeichnet, dass** das Verteilungssystem an einer mobilen Einheit angebracht ist.

8. System zum Reduzieren der Emission von Schlamm, dass ein Verteilungssystem zum Verteilen einer Schlamm nach einem der Ansprüche 1-7 umfasst, **dadurch gekennzeichnet, dass** das System zum Reduzieren der Emission von Schlamm ferner einen Puffertank (57) umfasst, wobei der Puffertank von dem Schlammtank getrennt angeordnet ist (5), wobei die Erzeugungsmittel in dem Schlammtank angeordnet sind und wobei der Puffertank folgendes aufweist:
- eine Mischerfunktion (59) für einen Schlammlagertank (58);
- ein Mechanismus zum Selbstladen, vorzugsweise eine Pumpe oder ein Propeller; wobei der Mechanismus zum Selbstladen Schlamm von dem Schlammlagertank (57) zu dem Puffertank (57) transportiert;
- gegebenenfalls ein Säureadditionssystem (69) mit einem oder mehreren pH-Sensoren (65); wobei das Säureadditionssystem vorzugsweise einen Säureinjektor, einen Säuretank (69) und Mittel zum Verbinden des Säureinjektors mit dem Säuretank umfasst;
- ein externes oder internes Netzteil,
- und / oder eine einstellbare Rückladefähigkeit (75), wodurch Schlamm aus dem Puffertank (57) in den Schlammtank (5) gepumpt werden kann.

9. Verfahren zum Reduzieren der Emission flüchtiger Substanzen, wie Ammoniak, aus einem Schlamm durch ein Verteilungssystem zum Verteilen eines Schlamms und / oder aus einem Systems zum Reduzieren der Emission von Schlamm nach einem der Ansprüche 1 bis 8, **dadurch gekennzeichnet, dass** das Verfahren die folgenden Schritte umfasst
- Ändern des gesamten Schlamms in eine emissionsreduzierte Substanz, wobei die emissionsreduzierte Substanz ein Schaum ist;
- Hinzufügen der geschäumten emissionsreduzierten Substanz zu einer Bodenoberfläche an einer Applikationsstelle (9).

10. Verfahren zum Reduzieren der Emission flüchtiger Substanzen nach Anspruch 9, **dadurch gekennzeichnet, dass** die emissionsreduzierte Substanz eine Kombination verschiedener Schaumtypen ist.

11. Verfahren zum Reduzieren der Emission flüchtiger Substanzen nach einem der Ansprüche 9 oder 10, **dadurch gekennzeichnet, dass** der Schaum durch einen mechanischen Prozess, wie zum Beispiel Einspritzen eines Gases, hergestellt wird, wobei das Verfahren ausgewählt ist aus: Einblasen von Luft oder einem anderes Gas in den Schlamm; oder durch Schlagen von Luft oder anderem Gas in die Schlamm; oder durch Druckabbau im Schlamm z.B. durch Verwendung eines Druckluftschaumsystems (37, 43, 45, 57, 49) oder eines Luftaspirationssystems (37, 51, 53, 54, 55).

12. Verfahren zum Reduzieren der Emission flüchtiger Substanzen nach einem der Ansprüche 9-11, **dadurch gekennzeichnet, dass** eine Säure zu dem Schlamm gegeben wird, bevor der Schlamm in Schaum umgewandelt wird.

13. Verfahren zum Reduzieren der Emission flüchtiger Substanzen nach Anspruch 12, **dadurch gekennzeichnet, dass** die dem Schlamm zugesetzte Menge an Säure durch eine Rechnereinheit auf Basis von einer oder mehrerer Messungen des pH-Werts eines oder mehrerer pH-Sensoren (23, 25) erfasst wird und vorzugsweise kontinuierlich eingestellt wird.

14. Verfahren zum Reduzieren der Emission flüchtiger Substanzen nach einem der Ansprüche 9-13, **dadurch gekennzeichnet, dass** ein Additiv zu dem Schlamm oder der emissionsreduzierten Substanz nach der Umwandlung des gesamten Schlamms in die emissionsreduzierte Substanz hinzugefügt wird, wobei das Additiv ausgewählt wird aus einem oder mehreren der folgenden: Ozon, Wasserstoffperoxid, Eisen(II)-sulfatlösung, Bakterien oder einem Schaumstabilisator, wobei der Schaumstabilisator vorzugsweise ein Tensid und/oder ein Tensid-ähnliches Mittel ist, und besonders bevorzugt ein Schlammprotein oder extrahiertes Schlammprotein.

15. Verfahren zum Reduzieren der Emission flüchtiger Substanzen nach einem der Ansprüche 10-14, **dadurch gekennzeichnet, dass** die emissionsreduzierte Substanz aus zwei oder mehr Strömen erzeugt wird, wobei die Ströme jeweils unterschiedliche physikalische Eigenschaften haben, und wobei die Ströme über einander angeordnet sind und / oder die Ströme nebeneinander angeordnet sind.

16. Verfahren zum Reduzieren der Emission flüchtiger Substanzen nach einem der Ansprüche 9-14 unter Verwendung eines Verteilungssystems und / oder eines Systems zum Reduzieren der Emission von Schlamm nach einem der Ansprüche 1-8, **dadurch gekennzeichnet, dass** das Verfahren ferne folgende Schritte umfasst:
- Übertragen von Schlamm von einem Schlammlagertank (58) zu einem Puffertank (57) durch eine Selbstladevorrichtung, vorzugsweise eine Pumpe (73) oder einen Propeller;
- Behandeln des Schlamms mit Mitteln zum Verringern der Emission, wie zum Beispiel einer Säure, durch Hinzufügen oder Injizieren der Mittel zum Reduzieren der Emission des Schlamms in den Schlamm;
- Pumpen des Schlamm in einen Schlammtank (5) durch eine einstellbare Rückladefähigkeit (75), wobei der Schlamm zu einer Applikationsstelle (9) distribuiert werden kann.

## Revendications

1. Système de distribution (1) pour distribuer une boue, telle qu'un lisier, sur un site d'application (9) par exemple un champ agricole, ledit système comprenant
- un réservoir de boue (5) en communication liquide avec
- des moyens de réduction de l'émission à partir de ladite boue comprenant des moyens générateurs de mousse (37, 47, 54) qui sont configurés pour faire tourner la totalité de la boue en mousse pour empêcher des effets d'écoulement, de préférence à l'aide d'un système de mousse à air comprimé (37,43 45,47,49) ou d'un système de mousse à aspiration d'air (51, 53 54, 55) et
ledit moyen de réduction de l'émission est en communication avec
- des moyens de distribution (7) pour permettre à ladite boue moussée d'être placée sur le site d'application (9).

2. Système de distribution pour distribuer une boue selon la revendication 1 **caractérisé en ce que** les moyens générateurs de mousse (37, 47, 54) sont disposés sur le réservoir de boue (5).

3. Système de distribution pour distribuer une boue selon la revendication 1 **caractérisé en ce que** le système de distribution comprend en outre un réservoir d'acide (11) et des moyens (13) pour ajouter/injecter un acide dans ladite boue, le réservoir d'acide étant relié audit moyen générateur pour générer ladite mousse.

4. Système de distribution pour distribuer une boue selon l'une quelconque des revendications 2 à 3 **caractérisé en ce que** ledit système de distribution comprend en outre un ou plusieurs capteurs de pH (23, 25).

5. Système de distribution pour distribuer une boue selon l'une quelconque des revendications précédentes, **caractérisé en ce que** ledit système de distribution comprend en outre un ou plusieurs capteurs (27) capable de mesurer la quantité d'azote, de phosphore et/ou de potassium dans la boue.

6. Système de distribution pour distribuer une boue selon l'une quelconque des revendications précédentes, **caractérisé en ce que** ledit système de distribution comprend en outre une unité GPS avec une fonction logarithmique ou une unité GPS avec une fonction logarithmique et une connexion GSM.

7. Système de distribution pour distribuer une boue selon l'une quelconque des revendications précédentes, **caractérisé en ce que** ledit système de distribution est monté sur une unité mobile.

8. Système de réduction d'émission de boue comprenant un système de distribution pour distribuer une boue selon l'une quelconque des revendications 1 à 7 est **caractérisé en ce que** ledit système de réduction d'émission de boue comprend en outre un réservoir tampon (57), ledit réservoir tampon étant agencé séparément dudit réservoir de boue (5), lesdits moyens générateurs étant agencés au niveau dudit réservoir de boue, et ledit réservoir tampon comprenant
- une fonction de mélangeur (59) pour un réservoir de stockage de boue (58);
- un mécanisme d'auto-chargement, de préférence une pompe ou une hélice; ledit mécanisme d'auto-chargement transporte la boue à partir du réservoir de stockage de boue (57) vers le réservoir tampon (57);
- à titre facultatif, un système d'addition d'acide (69) avec un ou plusieurs capteurs de pH (65); ledit système d'addition d'acide comprend de préférence un injecteur d'acide, un réservoir d'acide (69), et des moyens pour connecter l'injecteur d'acide au réservoir d'acide;
- une unité d'alimentation externe ou interne,
- et/ou une capacité de rechargement réglable (75), par laquelle la boue peut être pompée à partir du réservoir tampon (57) vers le réservoir de boue (5).

9. Procédé pour réduire l'émission de substances volatiles telles que l'ammoniac à partir d'une boue par un système de distribution pour distribuer une boue et/ou un système de réduction d'émission de boue selon l'une quelconque des revendications 1 à 8, **caractérisé en ce que** ledit procédé comprend les étapes suivantes
- transformer toute la boue en une substance à émission réduite, ladite substance à émission réduite étant une mousse;
- ajouter ladite substance à émission réduite en mousse à une surface du sol au niveau d'un site d'application (9).

10. Procédé de réduction de l'émission de substances volatiles selon la revendication 9 **caractérisé en ce que** ladite substance à émission réduite est une combinaison de différents types de mousse.

11. Procédé de réduction de l'émission de substances volatiles selon l'une quelconque des revendications 9 ou 10 **caractérisé en ce que** ladite mousse est réalisée par un procédé mécanique tel que l'injection d'un gaz, ledit procédé étant choisi parmi l'un des éléments suivants : injecter de l'air ou un autre gaz dans ladite boue; ou par battage de l'air ou d'un autre gaz dans ladite boue; ou par dépressurisation de ladite boue, par exemple à l'aide d'un système de mousse d'air comprimé (37,43 45,57,49) ou d'un système de mousse à aspiration d'air (37, 51,53,54,55).

12. Procédé de réduction de l'émission de substances volatiles selon l'une quelconque des revendications 9 à 11 **caractérisé en ce qu'**un acide est ajouté à ladite boue avant que ladite boue ne soit transformée en mousse.

13. Procédé de réduction de l'émission de substances volatiles selon la revendication 12 **caractérisé en ce que** ladite quantité d'acide ajoutée à la boue est calculée par une unité d'ordinateur, et de préférence ajustée en continu, sur la base d'une ou de plusieurs mesures de pH obtenues par un ou plusieurs capteurs de pH (23, 25).

14. Procédé de réduction de l'émission de substances volatiles selon l'une quelconque des revendications 9 à 13 **caractérisé en ce qu'**un additif est ajouté à ladite boue ou à ladite substance à émission réduite après la transformation de la totalité de ladite boue dans ladite substance à émission réduite, ledit additif étant choisi parmi un ou plusieurs éléments parmi l'ozone suivant, peroxyde d'hydrogène, une solution de sulfate ferreux, des bactéries ou un agent de stabilisation de mousse, de préférence ledit agent de stabilisation de mousse est un tensioactif et/ou un agent tensioactif similaire, plus particulièrement, ledit agent de stabilisation de mousse est une protéine de boue ou une protéine de boue extraite.

15. Procédé de réduction de l'émission de substances volatiles selon l'une quelconque des revendications 10 à 14 **caractérisé en ce que** ladite substance à émission réduite est créée à partir de deux flux ou plus, lesdits flux ayant chacun des propriétés physiques différentes, et lesdits flux étant disposés les uns sur les autres et/ou lesdits flux étant disposés côte à côte.

16. Procédé de réduction de l'émission de substances volatiles selon l'une quelconque des revendications 9 à 14, en utilisant un système de distribution et/ou un système de réduction d'émission de boue selon l'une quelconque des revendications 1 à 8, **caractérisé en ce que** ledit procédé comprend en outre les étapes suivantes
- transférer une boue d'un réservoir de stockage de boue (58) à un réservoir tampon (57) par un mécanisme d'auto-chargement, de préférence une pompe (73) ou une hélice;
- traiter ladite boue avec des moyens pour réduire l'emmission, telle qu'un acide, en ajoutant ou en injectant lesdits moyens pour réduire l'émission dans ladite boue;
- pomper ladite boue vers un réservoir de boue (5) par une capacité de rechargement réglable (75), ladite boue pouvant être distribuée à un site d'application (9).
